Europäisches Patentamt

European Patent Office

Office européen des brevets

(19)

(11) Numéro de publication: **0 202 995**
**B1**

(12) **FASCICULE DE BREVET EUROPEEN**

(45) Date de publication du fascicule du brevet:
06.09.89

(51) Int. Cl.⁴: **C09K 7/02**

(21) Numéro de dépôt: **86400988.1**

(22) Date de dépôt: **07.05.86**

(54) **Dispersants pour fluides de forage et fluides de forage les contenant.**

(30) Priorité: **13.05.85  FR 8507189**

(43) Date de publication de la demande:
**26.11.86 Bulletin 86/48**

(45) Mention de la délivrance du brevet:
**06.09.89 Bulletin 89/36**

(84) Etats contractants désignés:
**DE FR GB IT NL SE**

(56) Documents cités:
**FR-A- 2 209 788**
**US-A- 4 451 628**

(73) Titulaire: **RHONE-POULENC CHIMIE, 25, quai Paul Doumer, F-92408 Courbevoie Cédex(FR)**

(72) Inventeur: **Aurenge, Jacques, La Ferlatière, F-69370 - Saint Didier au Mont d'Or(FR)**

(74) Mandataire: **Tavernier, Colette et al, RHONE-POULENC INTERSERVICES Service Brevets Chimie 25, Quai Paul Doumer, F-92408 Courbevoie Cédex(FR)**

EP 0 202 995 B1

ACTORUM AG

## Description

La présente invention concerne l'emploi d'un copolymère acrylique comme dispersant pour les boues de forage aqueuses.

L'invention concerne également les boues de forage contenant le dispersant, qui conviennent tout particulièrement pour le forage en moyenne et grande profondeur, dans les zones où apparaissent des difficultés liées à la température du sol, au contenu important en solides dont la boue peut se charger au cours du forage et enfin aux contraintes de l'environnement sur le plan de la toxicité.

On sait que, dans le forage des puits de pétrole ou de gaz naturels par le procédé rotary, on utilise un fluide qui a notamment pour rôle d'assurer la remontée des déblais formés sur le front de taille. Ce fluide, qui est introduit sous pression par l'axe du train de tiges, traverse la tête du trépan puis remonte dans l'espace annulaire limité par ledit train de tiges et le trou de forage lui-même, assure simultanément d'autres fonctions qui sont notamment le refroidissement de la tête du trépan, l'étanchéité des parois du puits, l'équilibre des pressions internes par la pression hydrostatique.

Les fluides de forage aqueux, ou boues de forage, sont constitués usuellement d'une suspension aqueuse contenant divers matériaux destinés à leur conférer certaines propriétés physiques et chimiques.

Ce sont notamment :
- des viscosifiants : argiles gonflantes insolubles dans l'eau que l'on choisit en fonction de la teneur en électrolytes de l'eau, souvent associées à un ou plusieurs polymères viscosifiants
- un dispersant ou fluidifiant
- éventuellement un réducteur de filtrat comme la carboxyméthylcellulose de bas poids moléculaire ou les amidons
- éventuellement un agent alourdissant comme la barytine.

L'eau peut être de l'eau douce, de l'eau de mer ou une saumure.

Un des problèmes majeurs qui se pose à l'homme de l'art est de disposer d'un système ayant des caractéristiques rhéologiques (viscosité - seuil de cisaillement - thixotropie) stables durant tout le cycle du forage et nonobstant les arrêts de circulation qui peuvent être nécessaires. Au fur et à mesure de la progression du forage et de la remontée des déblais, le contenu élevé en contaminants solides provoque un accroissement de la viscosité et la pression dans le système de circulation tend à devenir trop élevée s'il y a aggrégation et/ou floculation des particules d'argile.

Pour abaisser la viscosité, ou tout au moins limiter son augmentation, et défloculer l'argile, des réducteurs de viscosité (dispersants ou fluidifiants) sont communément ajoutés au fluide de forage.

Dans les puits pétroliers, par suite de l'accroissement de la profondeur, des températures relativement élevées peuvent être rencontrées. Il est donc indispensable que les additifs possèdent une stabilité thermique suffisante. Pour des raisons évidentes d'économie, il est souhaitable qu'ils soient efficaces à faible dose.

Comme dispersants des boues de forage, les polyphosphates sont peu intéressants du fait de leur instabilité aux températures supérieures à 70°C. Les dérivés de la lignite et les lignosulfonates sont moins susceptibles de dégradation thermique. Cependant, l'efficacité de la lignite est limitée par les contaminants électrolytes (chlorure de sodium et sels de calcium notamment), qui conduisent à sa précipitation. Les lignosulfonates de chrome et de ferro-chrome sont utilisés à la fois comme dispersants et réducteurs de filtrat. Ils sont efficaces en présence de sels de calcium et à des températures allant jusqu'à 150°C mais la toxicité due au contenu en chrome limite de plus en plus leur emploi.

Parmi les autres dispersants préconisés pour les boues de forage, on peut citer des polymères comme les homopolymères d'acide acrylique de très bas poids moléculaire (brevet américain US-A 3 764 530) et les copolymères de l'acide maléique et du styrène sulfoné (brevet américain US-A 3 730 900).

On connaît également par le brevet américain US-A 4 451 628, des dispersants constitués de polymères du type acrylique obtenu par copolymérisation avec 0,01 à 5% en poids de méthallylsulfonate de sodium. Cependant, ces copolymères ne permettent pas de réduire la viscosité de façon suffisante.

Il a été trouvé des dispersants utilisables dans les fluides de forage qui sont non toxiques, insensibles à l'environnement salin, qui ont une excellente efficacité à faible concentration et qui sont stables à des températures pouvant atteindre et même dépasser 150°C.

La présente invention a pour objet l'emploi, à titre de dispersants dans les boues de forage aqueuses contenant, à titre de dispersant, un copolymère hydrosoluble d'acide acrylique et d'un sel soluble dans l'eau d'acide allyl-sulfonique caractérisé en ce que le dispersant résulte de la copolymérisation de 75 à 99 moles d'un mélange d'acide acrylique et d'acide méthacrylique dans un rapport molaire compris entre 0,15/1 et 6/1 avec 1 à 25 moles % d'un sel soluble dans l'eau de l'acide allyl – et/ou méthallylsulfonique.

Ces copolymères peuvent être obtenus par polymérisation radicalaire en solution aqueuse de l'acide acrylique et méthacrylique avec un allyl et/ou méthallylsulfonate alcalin, notamment de sodium, ou d'ammonium. On peut employer par exemple l'eau oxygénée comme catalyseur de formation de radicaux libres, en association avec l'alcool isopropylique en présence de faibles quantités de sel de cuivre, ce dernier pouvant être remplacé par une certaine quantité de sulfate d'hydroxylamine ou eau oxygénée avec un sel de fer (sulfate ferreux) et sulfate d'hydroxylamine, ou encore persulfate de sodium ou d'ammonium en présence d'acide acétique.

La solution du polymérisat obtenue peut être utilisée sous cette forme comme dispersant des boues de forage, mais elle peut également être concentrée, par tous moyens connus, ou bien le copolymère peut être isolé sous forme d'une poudre.

Selon une forme préférée de mise en œuvre de la présente invention, on utilise un copolymère pour lequel le rapport molaire de l'acide acrylique et de l'acide méthacrylique est compris entre 0,3/1 et 4/1 et encore plus préférentiellement entre 1/1 et 2/1.

Le copolymère obtenu présente une masse moléculaire pouvant être comprise entre environ 500 et 10000, et plus généralement entre environ 2000 et 6000.

Le dispersant est ajouté aux éléments constitutifs de la boue, de manière connue en soi. Il est efficace en quantité aussi faible que 0,01 g (extrait sec) par litre de boue. On incorpore généralement des quantités comprises entre 0,05 et 1 g de dispersant par litre de boue, bien que des quantités plus élevées, par exemple jusqu'à 10 g puissent être utilisées, selon les cas. Les quantités préférées sont comprises entre 0,1 et 0,4 g/litre.

Les exemples suivants illustrent l'invention :

## Exemple 1

### Préparation du dispersant

On prépare les deux solutions suivantes :

| Solution A | Eau déminéralisée | 350 g |
|---|---|---|
| | Acétate de cuivre | 0,5 g |
| | Méthallylsulfonate de sodium | 5 g |
| | Isopropanol | 50 g |
| Solution B | Eau déminéralisée | 450 g |
| | Acide acrylique | 230 g |
| | Acide méthacrylique | 230 g |
| | Méthallylsulfonate de sodium | 50 g |

Dans un réacteur de 2 l muni d'un agitateur, de trois tubes d'introduction d'azote, d'introduction de monomères et d'introduction de catalyseur, on place sous azote la solution A. On chauffe à reflux le milieu desaéré et agité, puis on introduit 100 g de la solution B et 12 ml d'eau oxygénée à 110 volumes. On maintient la solution à reflux et sous agitation, puis on introduit en continu et simultanément les 860 g restant de la solution B et 68 ml d'eau oxygénée. Cette addition dure 1 heure 30 minutes. On ajoute encore 10 ml d'eau oxygénée, on maintient à reflux la solution 30 minutes, puis à nouveau 10 ml d'eau oxygénée et on maintient 1 heure 30 minutes à reflux.

La solution est concentrée par distillation sous vide puis refroidie.

Le concentrat a un extrait sec de 49,5 % et une densité de 1,185. La viscosité Brookfield est de 1.300 mPa.s (Modèle RV - aiguille n° 2).

Masse moléculaire moyenne en poids du polymère Mw # 4.000

Diamètre hydrodynamique des particules par diffusion de lumière en solution à 5,1 g/l, Ø = 45 Angstroms ($45 \cdot 10^{-10}$ m).

### Préparation de la boue de forage

On prépare une boue avec de l'eau douce et des argiles bentonitiques en introduisant dans 8,9 litres d'eau, 410 g de bentonite FB5 et 600 g de bentonite FR2 (produits commerciaux de la Société CECA) ayant un rendement de, respectivement, 35 m³ et 15 m³ de boue par tonne d'argile mise en oeuvre définition du rendement selon la spécification n° DFCP 4 "Drilling Fluid material bentonite" de l'OCMA (Oil Companies Materials Association).

On ajuste le pH à 9,5 par addition de soude. On agite 3 minutes au moyen d'une turbine ULTRATUR-RAX tournant à 15.000 tours/minute et on laisse refroidir à 25°C.

On sépare la boue en plusieurs fractions aliquotes.

Dans chaque fraction, on ajoute le dispersant en quantités variables selon le Tableau 1. On cisaille à nouveau 30 secondes à l'aide de la turbine. On laisse reposer 30 minutes et on détermine les caractéristiques rhéologiques au moyen d'un viscosimètre FANN modèle 35A, à la température de 25°C.

On mesure la viscosité apparente (Va), la viscosité plastique (Vp), le seuil d'écoulement ou yield value (YV) et la valeur du gel initial et du gel à 10 minutes (gel 0/10). Ces caractéristiques sont définies dans l'ouvrage "Drilling and Drilling Fluids - G.V. Chilingarian and P. Vorabutr - Elsevier 1981".

A titre comparatif, on mesure les performances d'un lignosulfonate de ferrochrome utilisé selon l'art antérieur (marque Brixel de la Société CECA).

Tous les résultats sont répertoriés dans le Tableau 1.

Il apparaît que la boue contenant le dispersant selon l'invention a un comportement rhéologique très supérieur à celui de la boue adjuvantée au moyen de lignosulfonate de ferro-chrome puisque les valeurs de viscosité et de gel qui mesurent l'épaississement de la boue sont bien plus faibles.

## Exemple 2

Avec la boue préparée selon l'exemple 1, on teste les dispersants à haute température.

Chaque boue, après addition du dispersant à la concentration choisie (Tableau 2) est introduite dans une cellule et soumise à un roulage dans une étuve rotative pendant 16 heures à la température de 90°C, ou 120°C ou 150°C.

Les résultats des mesures rhéologiques effectuées après le test thermique sont répertoriés dans le Tableau 2.

On constate que le dispersant selon l'invention reste efficace à haute température et beaucoup plus performant que le lignosulfonate de ferro-chrome.

Ainsi, pour une concentration de 2 g par litre de boue, la comparaison de valeurs YV, avant roulage et après roulage à différentes températures, montre que la moyenne YV est de 3,5 pour le produit selon l'invention à 49,5% d'extrait sec alors qu'elle est de 30 pour le lignosulfonate à 100% d'extrait sec.

## Exemples 3 à 10

Selon le mode opératoire décrit à l'exemple 1, on prépare des copolymères en faisant varier la quantité d'unités sulfonate et en maintenant constant le rapport molaire entre l'acide acrylique et l'acide méthacrylique.

Chaque polymère est introduit dans la formulation de boue de l'exemple 1, en quantité de 0,1 g (extrait sec) par litre de boue. On mesure les propriétés rhéologiques initiales après cisaillement et repos de 30 minutes.

Les quantités de monomères mises en œuvre, exprimées en moles, la composition du terpolymère (rapport molaire acide acrylique/acide méthacrylique – nombre de moles % de sulfonate) ainsi que les résultats des mesures figurent dans le Tableau 3.

## Exemples 11 à 16

On prépare des adjuvants de la manière décrite à l'exemple 1 en faisant varier le rapport molaire entre l'acide acrylique et l'acide méthacrylique. La composition du terpolymère et les résultats des mesures rhéologiques initiales de la boue (0,1 g de dispersant/litre) sont répertoriés dans le Tableau 4.

## Exemples 17 à 23 (non représentatifs de l'invention)

Dans ces exemples, le dispersant est préparé en utilisant soit de l'acide acrylique, soit de l'acide méthacrylique. Le copolymère obtenu est évalué comme dans les exemples précédents. Les compositions et résultats des mesures sont consignés dans le Tableau 5.

Tableau 1

| Conditions opératoires | Dispersant g/litre de boue* | Brixel | | | | Copolymère selon l'invention | | | |
|---|---|---|---|---|---|---|---|---|---|
| | | Va mPa.s | Vp mPa.s | YV[a] | Gel 0/10 | Va mPa.s | Vp mPa.s | YV[a] | Gel 0/10 |
| Avant roulage | 0,5 | | | | | 9 | 6 | 6 | 2/8 |
| | 1 | 25 | 4 | 42 | 37/63 | 9 | 7 | 4 | 2/10 |
| | 2 | 22,5 | 15 | 15 | 30/60 | 6,5 | 5 | 3 | 1/2 |
| | 4 | 20 | 11 | 20 | 18/38 | 6 | 5 | 2 | 1/2 |
| | 6 | 19 | 7 | 24 | 19/42 | 6 | 6 | 0 | 1/1 |
| | 8 | 18 | 10 | 16 | 9/25 | 7 | 7 | 0 | 1/1 |

* Extrait sec = Brixel 100%, Copolymère 49,5%
[a] lb./100 ft$^2$. 1 lb./100 ft$^2$ = 0,478 Pa

Tableau 2

| Conditions opératoires | Dispersant g/litre de boue* | Brixel | | | | Invention | | | |
|---|---|---|---|---|---|---|---|---|---|
| | | Va mPa.s | Vp mPa.s | YV[a] | Gel 0/10 | Va mPa.s | Vp mPa.s | YV[a] | Gel 0/10 |
| Après roulage 16 h à 90°C | 0,5 | | | | | 30 | 22 | 16 | 4/22 |
| | 1 | 35 | 14 | 42 | 30/52 | 20,5 | 16 | 9 | 2/10 |
| | 2 | 37 | 18 | 36 | 26/45 | 15,5 | 13 | 5 | 2/3 |
| | 4 | 35 | 25 | 20 | 14/26 | 18,5 | 16 | 5 | 1/2 |
| | 6 | 29 | 20 | 18 | 9/21 | 17 | 14 | 6 | 2/9 |
| | 8 | 22 | 15 | 14 | 8/20 | 17 | 14 | 6 | 2/10 |
| Après roulage 16 h à 120°C | 1 | 34 | 13 | 42 | 35/38 | 21 | 18 | 6 | 0/12 |
| | 2 | 32 | 16 | 32 | 24/42 | 10 | 9 | 2 | 0/0 |
| | 4 | 30 | 19 | 22 | 18/28 | 9 | 8 | 2 | 0/0 |
| Après roulage 16 h à 150°C | 2 | 34 | 15 | 38 | 32/50 | 15 | 13 | 4 | 0/1 |

\* Extrait sec: Brixel 100%, Copolymère 49,5%
[a] lb./100 ft$^2$. 1 lb./100 ft$^2$ = 0,478 Pa

Tableau 3

| Ex. | Composition du dispersant | | | | AA[a] / MAA | –SO$_3$Na % | Rhéologie | | | |
|---|---|---|---|---|---|---|---|---|---|---|
| | AA[a] moles | MAA[a] moles | A–SO$_3$Na[a] moles | MA–SO$_3$Na[a] moles | | | Va mPa.s | Vp mPa.s | YV[b] | Gel[b] 0/10 |
| 3 | 3,19 | 2,67 | — | 0,095 | 1,19 | 1,6 | 24,5 | | 37 | 35/75 |
| 4 | 3,19 | 2,67 | — | 0,19 | 1,19 | 3,1 | 14 | 6 | 16 | 14/48 |
| 5 | 3,19 | 2,67 | — | 0,348 | 1,19 | 5,61 | 16,5 | 6 | 21 | 19/50 |
| 6 | 3,19 | 2,67 | 0,382 | — | 1,19 | 6,12 | 15,5 | 7 | 17 | 19/50 |
| 7 | 2,14 | 1,79 | — | 1,31 | 1,195 | 25 | 26 | 6 | 40 | 53/92 |
| 8 | 2,14 | 1,79 | 1,30 | — | 1,195 | 24,8 | 19,5 | 4 | 31 | 32/64 |
| 9[c] | 0.83 | 0,70 | — | 2,21 | 1,19 | 59 | non mesurable: valeurs très élevées | | | |
| 10[c] | 0.83 | 0,70 | 2,29 | — | 1,19 | 60 | non mesurable: valeurs très élevées | | | |

[a] AA: acide acrylique
MAA: acide méthacrylique
A–So$_3$Na: allylsulfonate de sodium
MA–So$_3$Na: méthylallylsulfonate de sodium
$\frac{AA}{MAA}$: rapport molaire acide acrylique/méthacrylique
–SO$_3$Na: moles d'unités sulfonate dans le polymère
[b] lb./100 ft$^2$. 1 lb./100 ft$^2$ = 0,478 Pa
[c] hors invention

**Tableau 4**

| Ex. | Composition du dispersant | | | | | | Rhéologie | | | |
|-----|---------------------------|---------------------------|---------------------------|----------------------------|-------------------|---------------------|-------------|-------------|-------|--------|
|     | $AA^{(a)}$ moles | $MAA^{(a)}$ moles | $A\text{-}SO_3Na^{(a)}$ moles | $MA\text{-}SO_3Na^{(a)}$ moles | $\dfrac{AA^{(a)}}{MAA}$ | $-SO_3Na^{(a)}$ % | Va mPa.s | Vp mPa.s | $YV^{(b)}$ | $Gel^{(b)}$ 0/10 |
| 11 | 0,79 | 4,57 | – | 0,318 | 0,17 | 5,6 | 29 | 10 | 38 | 45/85 |
| 12 | 1,38 | 3,84 | 0,312 | – | 0,35 | 5,6 | 15,5 | 5 | 20,5 | 18/50 |
| 13 | 2,125 | 3,56 | – | 0,348 | 0,597 | 5,77 | 16 | 6 | 20 | 20/58 |
| 14 | 4,25 | 1,78 | – | 0,348 | 2,39 | 5,45 | 18,5 | 8 | 21 | 20/61 |
| 15 | 4,58 | 1,16 | 0,347 | – | 3,95 | 5,7 | 17,5 | 7 | 21 | 13/53 |
| 16 | 5,21 | 0,87 | – | 0,38 | 6 | 5,9 | 23,5 | 6 | 35 | 34/75 |

[a] AA: acide acrylique
MAA: acide méthacrylique
A-SO₃Na: allylsulfonate de sodium
MA-SO₃Na: méthylallylsulfonate de sodium
$\dfrac{AA}{MAA}$: rapport molaire acide acrylique/méthacrylique
-SO₃Na: moles d'unités sulfonate dans le polymère
[b] lb./100 ft². 1 lb./100 ft² = 0,478 Pa

**Tableau 5**

| Ex. | Composition du dispersant | | | | | Rhéologie | | | |
|-----|---------------------------|---------------------------|---------------------------|----------------------------|---------------------|-------------|-------------|-------|--------|
|     | $AA^{(a)}$ moles | $MAA^{(a)}$ moles | $A\text{-}SO_3Na^{(a)}$ moles | $MA\text{-}SO_3Na^{(a)}$ moles | $-SO_3Na^{(a)}$ % | Va mPa.s | Vp mPa.s | $YV^{(b)}$ | $Gel^{(b)}$ 0/10 |
| 17 | | 5,35 | – | 0,348 | 6,12 | 20 | 5 | 30 | 38/70 |
| 18 | 6,39 | – | – | 0,475 | 6,92 | 26 | 7 | 38 | 50/80 |
| 19 | | 5,23 | 0,347 | – | 6,2 | 19 | 5 | 28 | 32/55 |
| 20 | 4,29 | – | – | 1,43 | 25 | 25 | 3 | 44 | 52/84 |
| 21 | – | 3,37 | – | 1,13 | 25 | 26,5 | 3 | 47 | 50/80 |
| $22^{(c)}$ | 3,19 | – | – | 1,71 | 34,9 | 30 | 2 | 56 | 58/95 |
| $23^{(c)}$ | – | 3,02 | – | 1,61 | 34,7 | 30 | 2 | 56 | 62/100 |

[a] AA: acide acrylique
MAA: acide méthacrylique
A-SO₃Na: allylsulfonate de sodium
MA-SO₃Na: méthylallylsulfonate de sodium
-SO₃Na: moles d'unités sulfonate dans le polymère
[b] lb./100 ft². 1 lb./100 ft² = 0,478 Pa
[c] hors invention

**Revendications**

1. Boues de forage aqueuses contenant, à titre de dispersant, un copolymère hydrosoluble d'acide acrylique et d'un sel soluble dans l'eau d'acide allyl-sulfonique caractérisées en ce que le dispersant résulte de la copolymérisation de 75 à 99 moles d'un mélange d'acide acrylique et d'acide méthacrylique dans un rapport molaire compris entre 0,15/1 et 6/1 avec 1 à 25 moles % d'un sel soluble dans l'eau de l'acide allyl – et/ou méthallylsulfonique.

2. Boues de forage selon la revendication 1 caractérisées en ce que le rapport molaire acide acrylique/acide méthacrylique est compris entre 0,3/1 et 4/1.

3. Boues de forage selon la revendication 1 caractérisées en ce que le rapport molaire acide acrylique/acide méthacrylique est compris entre 1/1 et 2/1.

4. Boues de forage selon l'une des revendications 1 à 3 caractérisées en ce que le sel soluble dans l'eau est un sel alcalin ou d'ammonium.

5. Boues de forage selon l'une des revendications 1 à 4 caractérisées en ce qu'elles contiennent 0,10 g à 10 g de dispersant par litre de boue.

**Patentanspüche**

1. Wäßriger Bohrschlamm, enthaltend als Dispergiermittel ein wasserlösliches Copolymer aus Acrylsäure und einem in Wasser löslichen Salz von Allylsulfonsäure, dadurch gekennzeichnet, daß das Dispergiermittel erhalten wird durch Copolymerisation von 75 bis 99 mol eines Gemisches aus Acrylsäure und Methacrylsäure in einem Molverhältnis zwischen 0,15:1 und 6:1 mit 1 bis 25 mol-% eines in Wasser löslichen Salzes von Allyl- und/oder Methallylsulfonsäure.

2. Bohrschlamm nach Anspruch 1, dadurch gekennzeichnet, daß das Molverhältnis Acrylsäure/Methacrylsäure zwischen 0,3:1 und 4:1 liegt.

3. Bohrschlamm nach Anspruch 1, dadurch gekennzeichnet, daß das Molverhältnis Acrylsäure/Methacrylsäure zwischen 1:1 und 2:1 liegt.

4. Bohrschlamm nach einem der Ansprüche 1 bis 3, dadurch gekennzeichnet, daß das in Wasser lösliche Salz ein Alkali- oder Ammoniumsalz ist.

5. Bohrschlamm nach einem der Ansprüche 1 bis 4, dadurch gekennzeichnet, daß er 0,10 bis 10 g Dispergiermittel pro Liter Aufschlämmung enthält.

**Claims**

1. Aqueous drilling muds containing, as a dispersant, a water-soluble copolymer of acrylic acid and a salt which is soluble in water of allyl-sulphonic acid characterised in that the dispersant results from the copolymerisation of from 75 to 99 moles of a mixture of acrylic acid and methacrylic acid in a molar ratio of between 0.15/1 and 6/1, with from 1 to 25 molar percent of a water-soluble salt of allyl and/or methallyl sulphonic acid.

2. Drilling muds according to claim 1 characterised in that the acrylic acid/methacrylic acid molar ratio is between 0.3/1 and 4/1.

3. Drilling muds according to claim 1 characterised in that the acrylic acid/methacrylic acid molar ratio is between 1/1 and 2/1.

4. Drilling muds according to one of claims 1 to 3 characterised in that the water-soluble salt is an alkali metal or ammonium salt.

5. Drilling muds according to one of claims 1 to 4 characterised in that they contain from 0.10 to 10 g of dispersant per litre of mud.